# EUROPEAN PATENT SPECIFICATION

(11) **EP 3 863 833 B1**
(45) Date of publication and mention of the grant of the patent: **10.01.2024**
(21) Application number: 19782639.9
(22) Date of filing: 10.10.2019
(51) Int. Cl.: B29C 64/106, B29C 64/205, B33Y 30/00

(54) **A THREE-DIMENSIONAL PRINTER HEAD**
DREIDIMENSIONALER DRUCKKOPF
TÊTE D'IMPRIMANTE TRIDIMENSIONNELLE

(30) Priority: 12.10.2018 EP 18200211
(43) Date of publication of application: 18.08.2021
(73) Proprietor: Universiteit Maastricht, 6211 LK Maastricht (NL); Academisch ziekenhuis Maastricht, 6229 HX Maastricht (NL)
(72) Inventor: MOTA, Carlos Miguel Domingues, 6229 ER MAASTRICHT (NL); MORONI, Lorenzo, 6229 ER MAASTRICHT (NL); SINHA, Ravi, 6229 ER MAASTRICHT (NL)
(74) Representative: Algemeen Octrooi- en Merkenbureau B.V.
(86) International application number: PCT/EP2019/077519
(87) International publication number: WO 2020/074661

(56) References cited:
- WO-A1-2016/191329
- CN-B- 103 923 522
- KR-A- 20160 120 031

## Description

The present disclosure relates to a three-dimensional printer head for printing a three-dimensional product, preferably allowing use of biopolymers for the fabrication of 3D scaffolds. The present disclosure also relates to an additive manufacturing system. The present disclosure further relates to a method for printing a three-dimensional product.

US 2012/0080814 A1 discloses a Precision Extrusion Deposition (PED) device allowing use of biopolymers in the fabrication of 3D scaffolds, wherein the PED device utilizes three major components: 1) Material Delivery; 2) 3D Motion; and 3) Computer Aided Modeling. The material delivery component includes interchangeable nozzles, multiple heating elements, and a precision drive screw. The heating elements heat the material to a process temperature. The precision screw drives the material through the material delivery chamber to the nozzle for extrusion. The 3D motion is governed with linear servo that permits the PED to move in the X-, Y-, and Z-directions. The computer aided modeling component of the PED enables a user to model three-dimensional structures accordingly. The known PED device is configured to process only one single starting material.

KR 2016 0120031 discloses a multi-material mixing melt extruder which comprises an extrusion member and fluid supply members. Each fluid supply member is configured to supply molten fluid to the extrusion member. Each fluid supply member includes a heating unit, a syringe inserted into the heating unit, and pressure injection connected to the top of the syringe.

It is a primary object of the present disclosure to provide an improved three-dimensional printer head with respect to the prior art. A secondary object is to provide a three-dimensional printer head configured for processing more than one starting material simultaneously. A tertiary object is to provide a three-dimensional printer head configured for printing composition gradients in the manufactured three-dimensional product.

These objects can be achieved with a three-dimensional printer head as claimed in claim 1.

The three-dimensional printer head comprises a receiving section having at least two inlets for receiving material into the receiving section, wherein the printer head further comprises a dispensing unit for printing a three dimensional product, an extrusion screw at least extending between the receiving section and the dispensing unit for conditioning the material received in the receiving section and for displacing the material to the dispensing unit for dispensing the conditioned material, and a pressure controller for controlling a pressure controlled material supply through the at least two inlets of the receiving section determining the mixing ratio of the material received in the receiving section.

The pressure controller provides a pressure controlled feeding mechanism for processing two separate starting materials received in the receiving section through the at least two inlets, for example two separate polymers and mix them in varying ratios during the printing process. Hence, the printer head is designed to allow dual material compounding in situ, which enables the manufacturing by a single continuous process of gradients scaffolds composed of different combination of the two starting (polymeric) materials. The printer head achieves printing controlled composition gradients by using the two starting materials mixed in various ratios. In currently available known 3D printers, this is not possible. When the composition has to be changed, it usually requires changing a cartridge or even a printer head.

Application of composition gradients includes producing monolithic compositions, with improved bonding at the interfaces of the composition and/or monolithic constructs with locally variable compositions. Material property gradients are also highly utilized in biology, for example within bone or at the interfaces between hard bones and softer tendons or ligaments. The three-dimensional printer head can be configured for tissue engineering of bone, tendons and ligaments and other biological applications where different material properties are required on different areas in the printed product. For example, the meshes for hernia treatment, which require a cell adherent surface on one side and a cell non-adherent surface on the other side could be printed in a single continuous process with the three-dimensional printer head disclosed in this disclosure.

The printer head according to this disclosure is configured for thermoplastic multi-material printing applications. The printer head is configured for processing and conditioning at least two separate thermoplastic materials for obtaining a thermoplastic multi-material to be dispensed by the dispensing unit for producing a 3D product in a continuous printing process.

In one aspect of this disclosure, the three-dimensional printer head comprises at least two reservoirs, each reservoir is connected to one of the two inlets of the receiving section for receiving materials from each of the reservoirs, wherein the pressure controller is configured to provide a pressure difference between the two reservoirs for controlling the pressure controlled material supply from each reservoir into the receiving section determining the mixing ratio of the materials received from the two reservoirs in the receiving section. The print head comprises at least two reservoirs, wherein a first reservoir of the at least two reservoirs is configured for holding a first starting thermoplastic material and a second reservoir is configured for holding a second starting thermoplastic material, wherein the thermoplastic material used can be the same in the first and second starting thermoplastic materials or different thermoplastic materials can be used in the at least two reservoirs. If the thermoplastic material used in the first and second starting thermoplastic materials is the same than the starting materials differ in composition of the starting materials, i.e. for example one of the starting materials comprises at least one additive such as a filler which is not present or in different amount in the other starting material. The first and the second starting materials are receivable in a continuous manner in the receiving section for mixing the at least two starting materials as a result of a pressure difference in the two reservoirs controlled by the pressure controller. The extrusion screw is arranged to mix the starting materials received in the receiving section and to transport the material being mixed to the dispensing unit for printing a three-dimensional product having thermoplastic composition gradients, i.e. comprising material property gradients and/or continuous composition gradients. Hence, the print head is adapted to process at least two different thermoplastic materials with a relatively high viscosity, i.e. a viscosity of at least 20 Pa.s. at 20 degrees Celsius, more preferred at least 25 Pa.s. at 20 degrees Celsius. The aim of the pressure difference is to supply the materials to the extrusion screw, and then the screw takes care of conditioning/mixing and material transport to the dispensing unit. Examples of tissue engineering thermoplastics include - polycaprolactone (PCL), Poly(ethylene oxide terephthalate)/poly(butylene terephthalate) (PEOT/PBT), and poly lactic acid (PLA).

By integrating the at least two reservoirs in the printer head, a pressure based feeding of the two starting materials can be self-regulating. In addition, this printer head has a minimal distance between the reservoir outlet and the receiving section inlet, i.e. the distance can even be zero or almost zero. The distance can be set to zero or almost zero as the outlet of the reservoir and the inlet of the receiving section can be the same or the outlet can be located against the inlet without a distance or with an insignificant distance in between. In one aspect of the print head disclosed herein, the (horizontal) distance between a (virtual) center line of one of the reservoirs and the outlet of the reservoir is identical or smaller than the (horizontal) distance between the center line of the reservoir and an outer wall surface of the reservoir, wherein the outlet of the reservoir and the inlet of the receiving section can be the same or the outlet can be located against the inlet without a distance or with an insignificant distance in between. A relatively long distance between an reservoir outlet and a receiving section inlet may provide a pressure drop or pressure fluctuations and/or a temperature drop or temperature fluctuations in the desired material feed from the reservoirs into the receiving section. A relatively short distance or no distance between a reservoir outlet and a receiving section inlet provides predictable and controllable conditions for pressure based feeding starting materials, in particular thermoplastics starting materials, to the receiving section, which provides a 3D (tissue) product having the desired predetermined characteristics. The arrangement of the reservoirs with respect to the remainder of the printer head may also reduce dead volume. Hence, by providing a printer head having integrated reservoirs, the printer head has an improved configuration for printing composition gradients in the three dimensional product. Further, this arrangement permits to apply (high) frequency pressure pulses to the reservoirs for example with pressure being on for only one reservoir at a time, and the ratio of the "pressure on" times is based on the desired compositions made from the two (separate) starting materials.

The printer head provides a pressure controlled feeding mechanism with the at least two reservoirs to control the ratio of thermoplastics starting materials mixed by the extrusion screw for printing. It has been found by the inventors that by means of a pressure controlled feeding mechanism in combination with the extrusion screw it has become possible to handle the high viscosity of molten thermoplastics. High viscosity in this document means a viscosity of at least 20 Pa.s. at 20 degrees Celsius, preferably at least 25 Pa.s. at 20 degrees Celsius. The print head disclosed herein may handle materials having a maximum viscosity of 1000 Pa.s.

The printer head further includes an auger extrusion screw having a length such that the extrusion screw is able to extend in at least a part of the receiving section. Such a configuration enables to provide the largest possible extrusion screw in a printer head having relatively compact dimensions. The relatively long screw allows the highest residence time as possible to improve mixing of the materials fed through the inlets of the receiving section.

In a further aspect of the printer head, the first inlet of the at least two inlets is diametrically opposed to the second inlet of the at least two inlets of the receiving section. This arrangement of the at least two inlets provides maximum access to the volume of the receiving section and improves in use controlled mixing of the two starting materials received in the receiving section.

The diametrically opposite feed inlets will also ensure force balance at the upper portion of the extrusion screw extending in the receiving section between the two inlets and will further prevent any bending moments on the extrusion screw. The extrusion screw preferably has at least a double thread to further ensure this force balance and providing excellent distributive mixing of the at least two starting materials in the receiving section zone and in the extrusion section zone. The extrusion screw has the same number of threads as the number of feed inlets of the receiving section, which is in the printer head of this disclosure at least two feed inlets. Hence, if more than two separate starting materials are being used, for example three starting materials, then the receiving section has three inlets and the extrusion screw has three threads to obtain the advantages mentioned in this paragraph.

To further improve and optimize the distributive and dispersive mixing and/or conditioning of the two starting materials by the extrusion screw, in particular for polymer mixing/conditioning, the extrusion screw has seen in the length direction of the extrusion screw, a feed section, a transition section and a compression section, wherein the feed section, the transition section and the compression section have a different screw geometry.

In this disclosure the screw geometry is defined by at least one of the following screw geometry parameters:
- screw thread shape seen in cross section, preferably triangular;
- screw diameter, for example an extrusion screw having a varying screw diameter, in particular a screw diameter of the extrusion screw being smaller near the dispensing unit than near the receiving section inlet;
- screw thread dimensions, for example screw thread depth and/or height, preferably an extrusion screw having a varying thread dimensions, more preferred the screw thread dimensions of the extrusion screw are smaller near the dispensing unit than near the receiving section inlet;
- screw thread pitch, preferably an extrusion screw having a varying screw thread pitch, more preferred screw thread pitch of the extrusion screw is smaller near the dispensing unit than near the receiving section inlet.

The following extrusion screw designs allow a beneficial "compressibility" effect of the material inducing pressure build-up to facilitate extrusion, i.e. an extrusion screw having a constant diameter with a screw thread having a variable depth of the cut and/or a variable pitch as mentioned above. Advantageously the depth of the cut is lower near the dispensing unit than near the receiving section inlet.

At least one of these screw geometry parameters can be used to obtain predetermined goals for the material processed by the extrusion screw, for example a relatively low torque and a relatively high degree of mixing the material by the extrusion screw.

In particular for (bio)polymer mixing, the feed section of the extrusions screw can be 30-70% of the length of the screw, the transition section can be 15-35% of the length of the screw and/or the compression section can be 15-35% of the length of the screw.

The extrusion screw comprises a barrel, wherein the barrel and/or the extrusion screw can be made of cemented carbide. Screw and barrel are preferably made of wear resistant cemented carbide, to enable the use of abrasive fillers in at least one starting material loaded in the receiving section through one of the two inlets.

The printer head as disclosed in this disclosure is moveable for providing a 3D additive manufactured product. The printer head together with the reservoirs can be fitted on several commercially available 3D printers having a gantry, i.e. a guide rail system, that is configured to move the printer head in a horizontal X-Y plane based on signals received from a controller unit and optionally the guide rail system can be configured to move the printer head also in the Z-axis orthogonal to the horizontal X-Y plane. The printer head weight with the reservoirs can be reduced by placing the pressure regulators on a printer's moving arm of the gantry.

The printer head may further comprise temperature conditioners, preferably heating elements for heating the material supplied through at least one of the two inlets and/or heating the receiving section, the extrusion screw section and/or the dispensing unit. It is also possible that for certain starting materials in at least one zone of the printer head the temperature conditioners comprise a heater/cooler element for heating or cooling the material being processed in the printer head to achieve the desired temperature and/or viscosity of the material(s) in a predetermined zone.

In addition, the printer head may comprises separate temperature conditioners for each reservoir such that it is possible to provide separate temperatures to the starting materials in each of the reservoirs.

The dispensing unit of the printer head may comprises a dispensing needle for depositing material being processed and conditioned in the printer head disclosed in this disclosure, preferably the dispensing needle comprises thermal insulation and/or a temperature conditioner.

The reservoirs can be detachably attachable to the printer head. The reservoirs can be separated from the printer head to facilitate cleaning. Further, it is possible that the reservoirs are made exchangeable for changing an empty reservoir with a full reservoir or for using different reservoirs for different starting materials. For example each reservoir may comprises a quick release fluid coupling for easily coupling the reservoir in a fluid communicating manner with the receiving section, such that the reservoirs can be substituted in a relatively quick and user-friendly manner. The reservoir may be provided with a one-way valve. For example, the quick release fluid coupling may be provided with a one-way valve. Such a one-way valve prevents leakage during coupling/decoupling of the removable reservoir from the printer head and/or prevents back flow in use from the receiving section into one of the reservoirs. The reservoirs are configured to be separable from the remainder of the print head such that the reservoirs are washable and/or sterilisable to avoid contaminations in (bio-)materials during various printing processes. As a result of the detachable connection of the reservoirs to the print head, it is not possible to use digital volume flow controllers to control feed to the receiving section. In the print head disclosed in this document using pressure based feeding, it is advantageous as explained above that there is no or almost no distance between reservoir and receiving section, i.e. the reservoir outlet and receiving unit inlet may have no spacing there between to guarantee a material feed into the receiving section having the desired characteristics. Further, the starting materials in the reservoirs may have very large difference in viscosity of materials being mixed, such that relatively large pressure differences may sometimes be required for supplying the starting material through the reservoir outlet and receiving section inlet. This large pressure difference between at least two reservoirs, especially with the relatively small or no distance between reservoir outlet and receiving unit inlet may lead to material flowing from the first reservoir to the second reservoir, i.e. a large pressure difference may result in an undesired backflow. By means of the one way valve, it is possible to inject only one material at a time for example in alternating duty cycles between the at least two starting materials, eliminating the risk of backflow. The extrusion screw is designed to provide sufficient residence time allowing the at least two materials to mix and to homogenize even if the materials are not simultaneously injected.

The present disclosure also relates to an additive manufacturing system comprising a printer head as disclosed above.

The present disclosure further relates to a method for printing a three-dimensional product by using a printer head as disclosed herein, by using at least two separate starting materials, preferably two separate polymers or more preferred two separate thermoplastics for manufacturing of a three-dimensional product comprising material property gradients and/or continuous composition gradients. At least one of the polymers used can be a biopolymer. The three-dimensional product obtained by this method is for example a gradient scaffold for tissue engineering.

In the method for printing it is possible to apply frequency pressure pulses for the material supply through each inlet of the receiving section. By means of the frequency pressure pulses it is possible that pressure is being on for material supply through a first inlet and simultaneously off for the material to be supplied through a second inlet providing no material supply through the second inlet, and vice versa, wherein the ratio of the pressure on times is based on the desired composition in the three-dimensional product being printed. Pressure on means that the pressure for example in a reservoir is such that material flows from that reservoir to the receiving section, and pressure off means that the pressure in the reservoir is lower than the minimum pressure required for material flow from that reservoir to the receiving section. To completely eliminate back- and counter-flows, pressure duty cycles can be implemented in combination with the one-way valves, such that only one pressure is on at a time and hence only one way valve is open at a time. The mixing ratio is then determined by the ratio of the pressure on times for each starting material.

It is understood that embodiments disclosed herein offer different advantages, and that no particular advantage is necessarily required for all embodiments.

The printer head and the additive manufacturing system will be explained in more detail below with reference to the appended figures showing exemplary embodiments, in which:
Figure 1 is schematic representation of an additive manufacturing system;
Figures 2a, 2b are sectional views showing details of a printer head;
Figures 3a-c are views showing details of an extrusion screw of a printer head;
Figure 4 shows a flow chart of the process steps for printing a 3D product, for example a 3D product for tissue engineering.

In the following description identical or corresponding parts have identical or corresponding reference numerals. Each feature disclosed with reference to a specific figure can also be combined with another feature disclosed in this disclosure, unless it is evident for a person skilled in the art that these features are incompatible.

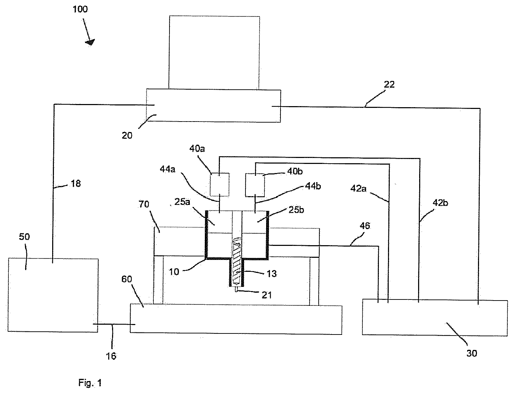

In figure 1 an additive manufacturing system 100 is shown comprising a computer system 20. The computer system 20 enables user interaction by an interface. In the computer system software (a computer program) is provided for controlling the processes in the system 100. The system 100 further comprises a pressure and temperature controller 30, pressure regulators 40a, 40b, a printer controller 50, a printer platform 60 and a gantry 70 carrying a printer head 10.

The gantry 70 supports in a movable manner the printer head 10. The gantry 70 receives instructions, schematically represented by line 16 in figure 1, from the printer controller 50 and the computer system 20, schematically represented by line 18 in figure 1, for moving the printer head 10 in a horizontal X-Y. Optionally, the printer head 10 can also be moved in the Z-axis orthogonal to the horizontal X-Y plane by the gantry 70 for printing a 3D additive manufactured product on the platform 60. It is also possible that the platform 60 can be moved in the Z-direction instead or in addition to the Z-axis movement of the printer head 10. The gantry 70 or the printer head 10 may support the pressure regulators 40a,40b.

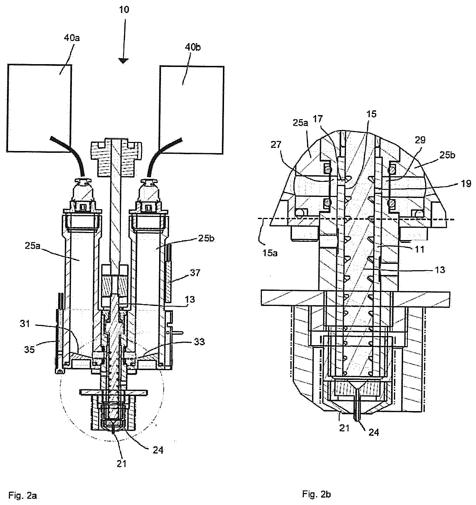

The three-dimensional printer head 10 for printing a 3D product is shown in more detail in figures 2a and 2b. The printer head 10 comprises a barrel 11 (figure 2b) and an extrusion screw 13 located in the barrel 11. A receiving section 15 (figure 2b) of the printer head 10 shown in the figures is formed between the barrel 11 and an upper portion of the extrusion screw 13. The upper portion of the extrusion screw 13 is identified in figure 2b by dotted line 15a. The receiving section 15 has two inlets 17, 19 for receiving material into the receiving section 15. The printer head 10 further comprises a dispensing unit 21 for printing a three dimensional product on the platform 60. The dispensing unit 21 comprises a dispensing needle 24, wherein the dispensing unit 21 comprises thermal insulation (not shown) for the needle 24 and/or a temperature conditioner (not shown). Insulation of dispensing needle 24 or a (separate) temperature conditioner facilitate to prevent or at least reduce the risk of needle clogging due to too low temperatures.

The lower portion (portion under the dotted line 15a) of the extrusion screw 13 extends between the receiving section and the dispensing unit. By means of the extrusion screw 13 the material received in the receiving section 15 is conditioned (mixed) and conveyed to the dispensing unit 21 for dispensing the conditioned material on the platform 60. The pressure controller 30 and the pressure regulators 40a, 40b are configured for controlling a pressure controlled material supply through the two inlets 17, 19 of the receiving section 15 determining the mixing ratio of the material received in the receiving section 15 and to be conditioned by the conveyor screw 13. The pressure controller 30 receives instructions, as schematically represented by line 22 in figure 1, from the computer program running on the computer system 20.

In the printer head 10 the three-dimensional printer head comprises two reservoirs 25a, 25b as shown in the figures 1 and 2a. Each reservoir 25a, 25b contains a starting material that is different from the starting material in the other reservoir 25a, 25b. Each reservoir 25a, 25b has an outlet 27, 29 which is directly connected to one of the two inlets 17, 19 of the receiving section 15 for receiving materials from each of the reservoirs. Directly connected means that the distance between the receiving section inlet 17, 19 and the outlet 27, 29 of the reservoir is zero or almost zero, because the outlet 27, 29 is located against the inlet 17, 19. The pressure controller 30 and the pressure regulators 40a, 40b are configured to provide a pressure difference between the two reservoirs 25a, 25b for controlling the pressure controlled material supply from each reservoir 25a, 25b into the receiving section 15 determining the mixing ratio of the materials received from the two reservoirs 25a, 25b in the receiving section 15. In other words, the pressure regulators 40a, 40b are configured to provide a different pressure inside each reservoir 25a, 25b. The lines 42a, 42b provide the control signals to the pressure regulators 40a, 40b, wherein the lines 44a, 44b control the pressure inside the reservoirs. Further, this arrangement permits the pressure regulators 40a, 40b to apply frequency pressure pulses to the reservoirs 25a, 25b for example with pressure being on for only one reservoir at a time, and the ratio of the "pressure on" times is based on the desired compositions made from the two starting materials inside the reservoirs 25a, 25b. The pressure regulators 40a, 40b may comprise a pressure source, e.g. a pressure pump or the pressure regulators 40a, 40b are connected to a (remote) pressure source.

Seen from a top view (not shown) the first inlet 17 of the at least two inlets 17, 19 is diametrically opposed to the second inlet 19 of the at least two inlets 17, 19. In the sectional view of the printer head 10 as shown in figure 2b the inlets 17, 19 are in the vertical direction slightly offset from each other, but it is also possible to configure the inlets (not shown) such that the center lines of the inlets 17, 19 are located in one horizontal plane.

The reservoirs 25a, 25b are detachably attachable to the printer head 10. Each reservoir 25a, 25b can be screwed on the printer head 10. It is also possible that the printer head 10 comprises a quick release fluid coupling for coupling the reservoir in a fluid communicating manner with the receiving section 15.

The fluid connection between each reservoir 25a, 25b and the receiving section 15 is provided with a one-way valve. The one-way valve may be part of the quick release fluid coupling. Such a one-way valve prevents leakage during coupling/decoupling of the removable reservoir 25a, 25b from the printer head 10 and/or prevents back flow in use from the receiving section 15 into one of the reservoirs 25a, 25b. In particular with high viscosity materials, backflows as a result of relatively high pressures applied for material feed can be prevented effectively by means of the one-way valves. The one-way valve can be a ball based one-way valve. Using a ball based one-way valve has provided excellent results in printing gradients.

The reservoirs 25a, 25b are of identical construction and each reservoir has a slanted bottom profile 31, 33 toward the reservoir outlet 27, 29. The slanted bottom profile 31, 33 minimizes the dead zones which would cause material wastage which helps in the cleaning of the reservoirs 25a, 25b.

The printer head 10 comprises temperature conditioners, i.e. heating elements for heating the material supplied through at least one of the two inlets 17, 19, for heating the receiving section 15, the extrusion screw section and/or the dispensing unit 21. Each reservoir 25a, 25b of the printer head 10 comprises separate temperature conditioners 35, 37 for bringing the starting material in each reservoir 25a, 25b to a desired predetermined temperature. Each temperature conditioner in the printer head 10 is controlled by the pressure and temperature controller 30 which is schematically represented by the line 46. As mentioned above, the pressure and temperature controller 30 receiving receives temperature instructions, as schematically represented by line 22 in figure 1, from the computer program running on the computer system 20.

In an alternative additive manufacturing system (not shown), it is also possible that the temperature conditioners and the pressure regulators and/or the gantry receive instructions directly from the computer program running on the computer system.

The conditions used in the printer head for dispensing a material made from separate starting polymers: temperature in material reservoirs, receiving section, screw barrel and dispensing unit can be operated to a maximum temperature of 250 degrees Celsius and the reservoir pressures may vary between low vacuum and 1000 kPa, preferably between 100kPa and 1000 kPa.

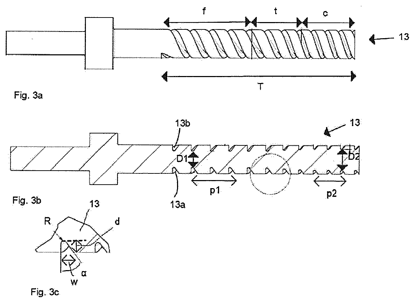

Figures 3a-c are views showing details of the extrusion screw 13 of the printer head. The extrusion screw has a double thread 13a, 13b as can be seen in the section view of the screw 13 in figure 3b. In the print head, the number of threads of the extrusion screw corresponds to the number of reservoirs containing material to be mixed by the extrusion screw. Seen in the length direction of the extrusion screw 13, the screw 13 has a feed section f, a transition section t and a compression section c in the direction from the receiving section 15 to the dispensing unit 21, wherein the feed section, the transition section and the compression section have a different screw geometry. Screw geometry is defined by at least one of the following screw geometry parameters: screw diameter, screw thread dimensions, for example screw thread depth and/or height, screw thread pitch, screw thread shape seen in cross section, for example triangular, square, and/or screw thread edge shape, for example corner edge, round edge, curvature of round edge and combinations of a thread having a round edge and a corner edge. In the extrusion screw design shown the feed section f is approx. 50% of the effective length T of the screw 13 , the transition section t is 25% of the effective length T of the screw and the compression section c is 25% of the effective length T of the screw 13. The length of each section can be varied, i.e. the feed section f can 30-70% of the effective length T of the screw 13, the transition section can be 15-35% of the effective length T of the screw 13 and/or the compression section can be 15-35% of the effective length T of the screw 13.

The extrusion screw 13 shown in figures 3a-c has the following features:
(i) diametrically opposite parallel threads,
(ii) a feed zone f with thread pitch p1 and core diameter D1, transition zone with pitch and diameter linearly varying to p2 and D2 respectively, and compression zone with pitch p2 and core diameter D2, and
(iii) a triangular thread cut as shown in detail in figure 3c of width w, cut depth d, an angle α defining the triangular cut and chamfer R at the tip of the tread cut.

The dimensions w, D1, D2, p1 and p2 are used to define an optimized screw geometry for conditioning polyactive polymers. For processing high viscosity materials, the width w of the thread cut for example decreases from the feed zone towards the compression zone. Core diameter D1 > core diameter D2. Pitch p1 > pitch p2. The triangular thread cut defines a wedge-shaped space between the extrusion screw 13 and the barrel 11 which enhances mixing compared to a rectangular shaped space, as a result of elongational flow of the polymer melts during the extrusion process.

As an non-limiting example: extrusion screw 13 dimensions of the threaded length can be 42 mm with a screw diameter of 6 mm. The triangular thread cut has an angle α 37 degrees and a chamfer at tip of cut R of 0.3 mm. The feed zone has a length f of 21 mm, and a pitch p1 of 8 mm, and a cut depth d of 1.3 mm. The transition zone has a linear transition of the pitch of 8 mm (p1) to 6 mm (p2) and a cut depth d linear transition from 1.3 mm to 0.8 mm over a length t of 10 mm. The compression zone has a length c of 11 mm, a pitch p2 of 6 mm, and a cut depth of 0.8 mm.

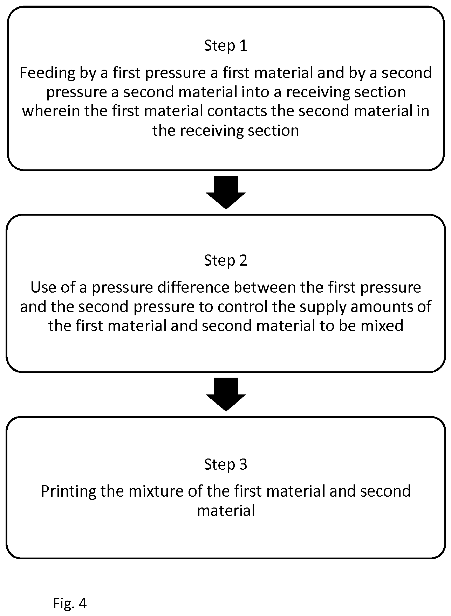

A process for printing a three-dimensional product comprising material property gradients, in particular gradient scaffolds for tissue engineering, by using at least two different starting materials, in particular two different polymers or two separate thermoplastics, for manufacturing of a three-dimensional product. Different starting materials means in this disclosure that the materials have different characteristics/properties. This process comprises at least the following steps, which are depicted in figure 4:
Step 1: By means of a first pressure feeding at least a first material of the at least two different starting thermoplastic materials into a receiving section of a print head and feeding by means of a second pressure a second thermoplastic material into a receiving section, wherein in the receiving section the first material contacts the second material;
Step 2: Providing a pressure difference between the first pressure and the second pressure to control the supply amounts of the first material and second material to be mixed;
Step 3: Printing the mixture of the first material and second material. The above disclosed three-dimensional printing process is used for tissue engineering of bone, tendons and ligaments and other biological applications where different material properties are required on different areas in the printed product.

In step 2 mixing is performed by means of an extrusion screw which mixes and transports the mixture to a dispensing unit for printing the mixture. Between steps 1 and 2 a pressure threshold for the first material and the second material is determined, wherein a pressure just above the pressure threshold supplies material continuously to the receiving section, but is not sufficient to extrude it without screw motion. In Step 2 it is possible to use complementary duty-cycles of the two pressures to control the supply amounts of the first material and second material to be mixed. For example for a duty-cycle with a 5 second total period, if for 3 s the first reservoir is above the pressure threshold and the second pressure corresponds to or is below the pressure threshold and then for the remaining 2 s vice versa for the second reservoir, a mixture of approximately 60% of the first material can be extruded. Turning only one pressure above the threshold pressure at a time ensures that pressure imbalances cannot close the one-way valves. By means of the pressure duty cycles only one of the at least two starting materials is being fed to the receiving section at a time.

The foregoing outlines features of several embodiments so that those skilled in the art may better understand the aspects of the present disclosure. Those skilled in the art should appreciate that they may readily use the present disclosure as a basis for designing or modifying other printer head structures for carrying out the same purposes and/or achieving the same advantages of the embodiments introduced herein.

## Claims

1. A three-dimensional printer head (10) comprising a receiving section (15) having at least two inlets (17, 19) for receiving material into the receiving section, and at least two reservoirs (25a, 25b), each reservoir is connected to one of the two inlets of the receiving section for receiving materials from each of the reservoirs wherein the printer head further comprises a dispensing unit (21) for printing a three dimensional product, an extrusion screw (13) at least extending between the receiving section and the dispensing unit for conditioning the material received in the receiving section and for displacing the material to the dispensing unit for dispensing the conditioned material, **characterised in that** the printer head further comprises a pressure controller (30) for controlling a pressure controlled material supply through the at least two inlets of the receiving section, wherein the pressure controller is configured to provide a pressure difference between the two reservoirs for controlling the pressure controlled material supply from each reservoir into the receiving section determining the mixing ratio of the materials received from the two reservoirs in the receiving section.

2. The three-dimensional printer head (10) according to claim 1, wherein a first reservoir of the at least two reservoirs is configured for holding a first starting thermoplastic material and a second reservoir of the at least two reservoirs is configured for holding a second starting thermoplastic material, wherein the first and the second starting materials are receivable in a continuous manner in the receiving section for mixing the at least two starting materials as a result of the pressure difference between the two reservoirs controlled by the pressure controller.

3. The three-dimensional printer head (10) according to claim 1 or 2, wherein the extrusion screw extends in at least a part of the receiving section.

4. The three-dimensional printer head (10) according to any of the preceding claims, wherein in the receiving section the first inlet of the at least two inlets is diametrically opposed to the second inlet of the at least two inlets.

5. The three-dimensional printer head (10) according to any of the preceding claims, wherein the printer head is moveable for providing a 3D additive manufactured product.

6. The three-dimensional printer head (10) according to any of the preceding claims, wherein seen in the length direction of the extrusion screw, the screw has a feed section (f), a transition section (t) and a compression section (c), wherein the feed section, the transition section and the compression section have a different screw geometry, preferably the feed section is 30-70% of the length of the screw, the transition section is 15-35% of the length of the screw and/or the compression section is 15-35% of the length of the screw.

7. The three-dimensional printer head (10) according to claim 6, wherein screw geometry is defined by at least one of the following screw geometry parameters:
- screw thread shape seen in cross section, for example triangular, square;
- screw diameter;
- screw thread dimensions, for example screw thread depth and/or height;
- screw thread pitch;
- screw thread edge shape, for example corner edge, round edge, curvature of round edge and combinations of a thread having a round edge and a corner edge.

8. The three-dimensional printer head (10) according to any of the preceding claims, wherein the extrusion screw has at least a double thread.

9. The three-dimensional printer head (10) according to any of the preceding claims, wherein the printer head comprises temperature conditioners, preferably heating elements for heating the material supplied through at least one of the two inlets, the receiving section, the extrusion screw section and/or the dispensing unit, and/or the dispensing unit comprises a dispensing needle, preferably the dispensing needle comprises thermal insulation and/or a temperature conditioner

10. The three-dimensional printer head (10) according to any of the preceding claims, wherein the extrusion screw comprises a barrel (11), wherein the barrel and/or the extrusion screw are made of cemented carbide.

11. The three-dimensional printer head (10) according to any of the preceding claims 2-10, wherein the reservoirs are detachably attachable to the printer head, preferably the printer head comprises a quick release fluid coupling for coupling each reservoir in a fluid communicating manner with the receiving section, preferably the quick release fluid coupling is provided with a one-way valve.

12. The three-dimensional printer head (10) according to any of the preceding claims 2-11, wherein the printer head comprises separate temperature conditioners (35, 37) for each reservoir.

13. Additive manufacturing system (100) comprising a three-dimensional printer head (10) according to any of the preceding claims.

14. A process for printing a three-dimensional product by using the three-dimensional printer head (10) claimed in any of the preceding claims 1-12, by using at least two separate starting materials, preferably two separate polymers or two separate thermoplastics for manufacturing of a three-dimensional product comprising material property gradients, for example gradient scaffolds for tissue engineering.

15. The process according to claim 14, wherein frequency pressure pulses are applied for the material supply through each inlet of the receiving section, preferably with pressure being on for material supply through a first inlet (17) and on the same time off for no material supply through a second inlet (19), and vice versa, wherein the ratio of the pressure on times is based on the desired composition in the three-dimensional product being printed.

## Patentansprüche

1. Kopf (10) für dreidimensionalen Drucker, der einen Empfangsabschnitt (15) mit wenigstens zwei Einlässen (17, 19) zum Empfangen von Material in dem Aufnahmeabschnitt und wenigstens zwei Vorratsbehälter (25a, 25b) umfasst, wobei jeder Vorratsbehälter mit einem der beiden Einlässe des Empfangsabschnitts verbunden ist, um Materialien von jedem der Vorratsbehälter zu empfangen, wobei der Druckerkopf ferner eine Ausgabeeinheit (21) zum Drucken eines dreidimensionalen Produkts und eine Extrusionsschraube (13), die sich wenigstens zwischen dem Empfangsabschnitt und der Ausgabeeinheit erstreckt, um das in dem Empfangsabschnitt empfangene Material zu konditionieren und um das Material zu der Ausgabeeinheit zu verlagern, um das konditionierte Material auszugeben, umfasst, **dadurch gekennzeichnet, dass** der Druckerkopf ferner eine Drucksteuereinheit (30) zum Steuern einer druckgesteuerten Materialzufuhr durch die wenigstens zwei Einlässe des Empfangsabschnitts umfasst, wobei die Drucksteuereinheit konfiguriert ist, eine Druckdifferenz zwischen den beiden Vorratsbehältern bereitzustellen, um die druckgesteuerte Materialzufuhr von jedem Vorratsbehälter in den Empfangsabschnitt zu steuern, um das Mischungsverhältnis der Materialien, die von den beiden Vorratsbehältern im Empfangsabschnitt empfangen werden, zu bestimmen.

2. Kopf (10) für dreidimensionalen Drucker nach Anspruch 1, wobei ein erster Vorratsbehälter der wenigstens zwei Vorratsbehälter konfiguriert ist, ein erstes thermoplastisches Ausgangsmaterial zu halten, und ein zweiter Vorratsbehälter der wenigstens zwei Vorratsbehälter konfiguriert ist, ein zweites thermoplastisches Ausgangsmaterial zu halten, wobei das erste und das zweite Ausgangsmaterial auf kontinuierliche Weise in dem Empfangsabschnitt empfangen werden können, um die wenigstens zwei Ausgangsmaterialien als Folge der Druckdifferenz zwischen den beiden Vorratsbehältern, die durch die Drucksteuereinheit gesteuert wird, zu mischen.

3. Kopf (10) für dreidimensionalen Drucker nach Anspruch 1 oder 2, wobei sich die Extrusionsschraube wenigstens in einem Teil des Empfangsabschnitts erstreckt.

4. Kopf (10) für dreidimensionalen Drucker nach einem der vorhergehenden Ansprüche, wobei sich in dem Empfangsabschnitt der erste Einlass der wenigstens zwei Einlässe dem zweiten Einlass der wenigstens zwei Einlässe diametral gegenüber befindet.

5. Kopf (10) für dreidimensionalen Drucker nach einem der vorhergehenden Ansprüche, wobei der Druckerkopf beweglich ist, um ein additiv gefertigtes 3D-Produkt bereitzustellen.

6. Kopf (10) für dreidimensionalen Drucker nach einem der vorhergehenden Ansprüche, wobei bei Betrachtung in der Längsrichtung der Extrusionsschraube die Schraube einen Speiseabschnitt (f), einen Übergangsabschnitt (t) und einen Kompressionsabschnitt (c) besitzt, wobei der Speiseabschnitt, der Übergangsabschnitt und der Kompressionsabschnitt eine unterschiedliche Schraubengeometrie haben, wobei vorzugsweise der Speiseabschnitt 30-70 % der Länge der Schraube ausmacht, der Übergangsabschnitt 15-35 % der Länge der Schraube ausmacht und/oder der Kompressionsabschnitt 15-35 % der Länge der Schraube ausmacht.

7. Kopf (10) für dreidimensionalen Drucker nach Anspruch 6, wobei die Schraubengeometrie durch wenigstens einen der folgenden Schraubengeometrieparameter definiert ist:
- Schraubengewindeform bei Betrachtung im Querschnitt, beispielsweise dreieckig, quadratisch;
- Schraubendurchmesser;
- Schraubengewinde-Abmessungen, beispielsweise Tiefe und/oder Höhe des Schraubengewindes;
- Schraubengewindesteigung;
- Schraubengewinde-Kantenform, beispielsweise eckige Kante, runde Kante, Krümmung der runden Kante und Kombinationen eines Gewindes mit runder Kante und eckiger Kante.

8. Kopf (10) für dreidimensionalen Drucker nach einem der vorhergehenden Ansprüche, wobei die Extrusionsschraube wenigstens ein Doppelgewinde besitzt.

9. Kopf (10) für dreidimensionalen Drucker nach einem der vorhergehenden Ansprüche, wobei der Druckerkopf Temperatureinstelleinrichtungen aufweist, vorzugsweise Heizelemente zum Heizen des Materials, das durch wenigstens einen der beiden Einlässe zugeführt wird, des Empfangsabschnitts, des Extrusionsschraubenabschnitts und/oder der Ausgabeeinheit, und/oder die Ausgabeeinheit eine Ausgabenadel aufweist, wobei die Ausgabenadel vorzugsweise eine Wärmeisolation und/oder eine Temperatureinstelleinrichtung aufweist.

10. Kopf (10) für dreidimensionalen Drucker nach einem der vorhergehenden Ansprüche, wobei die Extrusionsschraube ein Gehäuse (11) aufweist, wobei das Gehäuse und/oder die Extrusionsschraube aus Hartmetall hergestellt sind.

11. Kopf (10) für dreidimensionalen Drucker nach einem der vorhergehenden Ansprüche 2-10, wobei die Vorratsbehälter an dem Druckerkopf abnehmbar befestigt werden können, wobei der Druckerkopf vorzugsweise eine Schnelllöse-Fluidkupplung aufweist zum fluidkommunikationstechnischen Koppeln jedes Vorratsbehälters mit dem Empfangsabschnitt, wobei die Schnelllöse-Fluidkupplung mit einem Einwegeventil ausgerüstet ist.

12. Kopf auf 10) für dreidimensionalen Drucker nach einem der vorhergehenden Ansprüche 2-11, wobei der Druckerkopf getrennte Temperatureinstelleinrichtungen (35, 37) für jeden Vorratsbehälter aufweist.

13. Additives Fertigungssystem (100), das einen Kopf (10) für dreidimensionalen Drucker nach einem der vorhergehenden Ansprüche enthält.

14. Verfahren zum Drucken eines dreidimensionalen Produkts unter Verwendung des Kopfes (10) für dreidimensionalen Drucker nach einem der vorhergehenden Ansprüche 1-12 unter Verwendung wenigstens zweier getrennter Ausgangsmaterialien, vorzugsweise zweier getrennter Polymere oder zweier getrennter thermoplastischer Materialien zum Fertigen eines dreidimensionalen Produkts, das Materialeigenschaftsgradienten, beispielsweise Gradientengerüste für die Gewebekonstruktion, aufweist.

15. Verfahren nach Anspruch 14, wobei für die Materialzufuhr durch jeden Einlass des Empfangsabschnitts Frequenzdruckimpulse angewendet werden, wobei vorzugsweise für die Materialzufuhr durch den ersten Einlass (17) ein Druck angelegt wird und gleichzeitig für die Materialzufuhr durch einen zweiten Einlass (19) kein Druck angelegt wird, und umgekehrt, wobei das Verhältnis der Druckanlegezeiten auf der gewünschten Zusammensetzung des gedruckten dreidimensionalen Produkts basiert.

## Revendications

1. Tête d'imprimante tridimensionnelle (10) comprenant une section de réception (15) ayant au moins deux entrées (17, 19) pour recevoir un matériau dans la section de réception, et au moins deux réservoirs (25a, 25b), chaque réservoir est relié à l'une des deux entrées de la section de réception pour recevoir des matériaux de chacun des réservoirs, dans laquelle la tête d'imprimante comprend en outre une unité de distribution (21) pour imprimer un produit tridimensionnel, une vis d'extrusion (13) s'étendant au moins entre la section de réception et l'unité de distribution pour conditionner le matériau reçu dans la section de réception et pour déplacer le matériau vers l'unité de distribution pour distribuer le matériau conditionné, **caractérisée en ce que** la tête d'imprimante comprend en outre un régulateur de pression (30) pour réguler une alimentation en matériau à pression régulée à travers les au moins deux entrées de la section de réception, dans laquelle le régulateur de pression est configuré pour fournir une différence de pression entre les deux réservoirs pour réguler l'alimentation en matériau à pression régulée provenant de chaque réservoir dans la section de réception déterminant le rapport de mélange des matériaux reçus des deux réservoirs dans la section de réception.

2. Tête d'imprimante tridimensionnelle (10) selon la revendication 1, dans laquelle un premier réservoir des au moins deux réservoirs est configuré pour contenir un premier matériau thermoplastique de départ et un deuxième réservoir des au moins deux réservoirs est configuré pour contenir un deuxième matériau thermoplastique de départ, dans laquelle les premier et deuxième matériaux de départ peuvent être reçus de manière continue dans la section de réception pour mélanger les au moins deux matériaux de départ en raison de la différence de pression entre les deux réservoirs régulée par le régulateur de pression.

3. Tête d'imprimante tridimensionnelle (10) selon la revendication 1 ou 2, dans laquelle la vis d'extrusion s'étend dans au moins une partie de la section de réception.

4. Tête d'imprimante tridimensionnelle (10) selon l'une des revendications précédentes, dans laquelle dans la section de réception, la première entrée des au moins deux entrées est diamétralement opposée à la deuxième entrée des au moins deux entrées.

5. Tête d'imprimante tridimensionnelle (10) selon l'une des revendications précédentes, dans laquelle la tête d'imprimante est mobile pour fournir un produit réalisé par fabrication additive 3D.

6. Tête d'imprimante tridimensionnelle (10) selon l'une des revendications précédentes, dans laquelle, vue dans la direction longitudinale de la vis d'extrusion, la vis a une section d'alimentation (f), une section de transition (t) et une section de compression (c), dans laquelle la section d'alimentation, la section de transition et la section de compression ont une géométrie de vis différente, de préférence la section d'alimentation représente 30 à 70% de la longueur de la vis, la section de transition représente 15 à 35% de la longueur de la vis et/ou la section de compression représente 15 à 35% de la longueur de la vis.

7. Tête d'imprimante tridimensionnelle (10) selon la revendication 6, dans laquelle la géométrie de vis est définie par au moins l'un des paramètres de géométrie de vis suivants :
- forme de filetage de vis vue en coupe transversale, par exemple triangulaire, carrée ;
- diamètre de vis ;
- dimensions de filetage de vis, par exemple profondeur et/ou hauteur de filetage de vis ;
- pas de filetage de vis ;
- forme de bord de filetage de vis, par exemple bord d'angle, bord rond, courbure du bord rond et combinaisons d'un filetage ayant un bord rond et un bord d'angle.

8. Tête d'imprimante tridimensionnelle (10) selon l'une des revendications précédentes, dans laquelle la vis d'extrusion présente au moins un double filetage.

9. Tête d'imprimante tridimensionnelle (10) selon l'une des revendications précédentes, dans laquelle la tête d'imprimante comprend des conditionneurs de température, de préférence des éléments chauffants pour chauffer le matériau fourni à travers au moins l'une des deux entrées, la section de réception, la section de vis d'extrusion et/ou l'unité de distribution, et/ou l'unité de distribution comprend une aiguille de distribution, de préférence l'aiguille de distribution comprend une isolation thermique et/ou un conditionneur de température.

10. Tête d'imprimante tridimensionnelle (10) selon l'une des revendications précédentes, dans laquelle la vis d'extrusion comprend un cylindre (11), dans laquelle le cylindre et/ou la vis d'extrusion sont réalisés en carbure cémenté.

11. Tête d'imprimante tridimensionnelle (10) selon l'une des revendications précédentes 2 à 10, dans laquelle les réservoirs peuvent être attachés de manière amovible à la tête d'imprimante, de préférence la tête d'imprimante comprend un raccord fluidique à dégagement rapide pour coupler chaque réservoir en communication fluidique avec la section de réception, de préférence le raccord fluidique à dégagement rapide est muni d'une soupape unidirectionnelle.

12. Tête d'imprimante tridimensionnelle (10) selon l'une des revendications précédentes 2 à 11, dans laquelle la tête d'imprimante comprend des conditionneurs de température distincts (35, 37) pour chaque réservoir.

13. Système de fabrication additive (100) comprenant une tête d'imprimante tridimensionnelle (10) selon l'une des revendications précédentes.

14. Procédé d'impression d'un produit tridimensionnel en utilisant la tête d'imprimante tridimensionnelle (10) revendiquée dans l'une des revendications précédentes 1 à 12, en utilisant au moins deux matériaux de départ distincts, de préférence deux polymères distincts ou deux thermoplastiques distincts pour la fabrication d'un produit tridimensionnel comprenant des gradients de propriétés de matériaux, par exemple des échafaudages à gradient pour l'ingénierie tissulaire.

15. Procédé selon la revendication 14, dans lequel des impulsions de pression à fréquence sont appliquées pour l'alimentation en matériau à travers chaque entrée de la section de réception, de préférence avec une pression activée pour l'alimentation en matériau à travers une première entrée (17) et en même temps désactivée pour l'absence d'alimentation en matériau à travers une deuxième entrée (19), et vice versa, dans lequel le rapport entre les temps d'activation de pression est basé sur la composition souhaitée dans le produit tridimensionnel en cours d'impression.
